# EUROPÄISCHE PATENTSCHRIFT

(11) **EP 1 065 600 B1**
(45) Veröffentlichungstag und Bekanntmachung des Hinweises auf die Patenterteilung: **20.01.2010**
(21) Anmeldenummer: 00202182.2
(22) Anmeldetag: 22.06.2000
(51) Int. Cl.: G06F 13/40

(54) **Datenbus-Transmitter**
Databus transceiver
Transmetteur de bus de données

(30) Priorität: 30.06.1999 DE 19930094
(43) Veröffentlichungstag der Anmeldung: 03.01.2001
(73) Patentinhaber: NXP B.V., 5656 AG Eindhoven (NL)
(72) Erfinder: Bühring, Peter, 52064 Aachen (DE)
(74) Vertreter: Krott, Michel

(56) Entgegenhaltungen:
- DE-A- 4 126 850
- US-A- 4 482 815
- US-A- 4 622 551

## Beschreibung

Die Erfindung bezieht sich auf einen Transmitter für einen zweidrahtigen, differentiellen Datenbus, dem mittels des Transmitters in einem aktiven Zustand des Transmitters ein dominanter Zustand aufprägbar ist und der sich in einem rezessiven Zustand befindet, wenn alle an den Datenbus angeschlossenen Transmitter sich in einem passiven Zustand befinden.

Derartige Transmitter, beispielsweise für den sogenannten CAN-Datenbus, zeichnen sich dadurch aus, daß sie in ihrem aktiven Zustand, in dem sie dem Datenbus den dominanten Zustand aufpragen, eine Leitung des Datenbusses auf einen hohen Pegel und die andere Leitung des Datenbusses auf einen niedrigen Pegel setzen. Geschieht dies gleichzeitig, wird so gut wie keine elektromagnetische Abstrahlung stattfinden da dann die Abstrahlung der einen Busleitung durch die Anstrahlung der anderen Busleitung mit umgekehrtem Vorzeichen kompensiert wird. Tatsächlich ist jedoch dieser ideale Zustand nicht erreichbar, da insbesondere die Transistoren, die zum Schalten der Signale auf den Datenbus eingesetzt werden, nicht ideal sind. Dies wiederum hat zur Folge, daß insbesondere beim Einschalten und beim Ausschalten des aktiven Zustands bzw. der definierten Pegel auf die beiden Datenbusleitungen elektromagnetische Abstrahlung über die Leitungen des Datenbusses stattfindet.

Bei einigen bekannten Transmittern wird versucht, die Abstrahlung dadurch zu verringern, daß die Abschlußwiderstände des Datenbusses geteilt werden und der Verbindungspunkt zwischen den geteilten Abschlußwiderständen auf ein Bezugspotential geführt wird. Hiermit kann zwar die Abstrahlung verringert werden, ist aber immer noch hoch genug, um gegebenenfalls störend zu wirken.

Es ist Aufgabe der Erfindung, einen Transmitter der eingangs genannten Art dahingehend weiterzuentwickeln, daß eine weiter verringerte elektromagnetische Abstrahlung beim Umschalten der Zustande stattfindet.

Diese Aufgabe ist dadurch gelöst, daß in dem Transmitter eine Kapazität sowie Schaltmittel vorgesehen sind, mittels welcher die Kapazität alternativ an eine elektrische Quelle oder zwischen die beiden Datenbus-Leitungen koppelbar ist,
und daß die Schaltmittel die Kapazität während Zeiten, in denen der Transmitter sich in einem passiven Zustand befindet, mittels der elektrischen Quelle laden und während Zeiten, in denen der Transmitter sich in einem aktiven Zustand befindet, die Kapazität zwischen die beiden Datenbus-Leitungen koppeln.

Im Gegensatz zu bekannten Transmittern, bei denen eine Spannungsquelle direkt auf die Leitungen des Datenbusses geschaltet wird, um im aktiven Zustand dem Datenbus den dominanten Zustand aufzuprägen, wird bei der Erfindung eine Kapazität eingesetzt, welche während der aktiven Zustandsphasen des Transmitters auf die beiden Datenbusleitungen geschaltet wird. Es spielt nun keine Rolle mehr, ob die beiden elektronischen Schalter, mittels derer die Kapazität auf den Datenbus geschaltet wird, gleiche Schaltcharakteristiken haben. In dem Augenblick nämlich, in dem die Kapazität mittels der Schaltmittel auf die beiden Leitungen des Datenbusses geschaltet wird, wird die Spannung auf den beiden Leitungen des Busses ausschließlich durch den Strom bestimmt, der durch die Kapazität fließt und nicht durch ein Potential der Spannungsquelle; vielmehr hat bei dem erfindungsgemäßen Transmitter die Kapazität ein schwebendes Potential. Dadurch wird erreicht, daß auch dann, wenn die beiden Pole der Kapazität nicht exakt gleichzeitig an die Datenbusleitungen geschaltet werden, eine nur minimale elektromagnetische Abstrahlung stattfindet.

Während derjenigen Zeiten, in der der Transmitter sich im passiven Zustand befindet, wird die Kapazität mittels einer elektrischen Quelle, beispielsweise einer Spannungs- oder Stromquelle geladen. Somit wird bei einem Übergang von dem passiven Zustand in den aktiven Zustand die Kapazität von der Spannungsquelle abgeschaltet und statt dessen auf die beiden Datenbusleitungen geschaltet. Umgekehrt wird bei einem Übergang von dem aktiven in den passiven Zustand die Kapazität von den Datenbusleitungen abgeschaltet und statt dessen auf die elektrische Quelle geschaltet.

Es ist somit durch einfachste Mittel gelungen, elektromagnetische Abstrahlung beim Umschalten zwischen den Zuständen stark zu vermindern.

Eine Ausgestaltung der Erfindung gemäß Anspruch 2 sieht in den Schaltmitteln elektronische Schalter vor, von denen jeweils zwei zur Anschaltung an die Spannungsquelle und zur Anschaltung an die beiden Datenbus-Leitungen vorgesehen sind. Vorteilhaft werden als elektronische Schalter, wie gemäß einer weiteren Ausgestaltung der Erfindung vorgesehen ist, Transistoren eingesetzt, bei denen es sich vorzugsweise um DMOS-Transistoren handelt, wie gemäß Anspruch 5 vorgesehen ist. DMOS-Transistoren weisen einen geringen Innenwiderstand im aktiven Zustand auf, so daß die Umschaltung der Kapazität auf alternativ die Spannungsquelle oder die Datenbus-Leitungen mit geringen Übergangswiderständen vorgenommen werden kann.

In einem Fall, in dem der Transmitter falsch arbeitet, könnte der Fall eintreten, daß dauernd versucht wird, ein dominantes Bit zu übertragen, was eigentlich nach der Übertragungsnorm nicht vorgesehen ist. In diesem Falle würde die Kapazität eine hohe kapazitive Last an den Datenbus-Leitungen darstellen. Um dieses zu vermeiden, können für einen derartigen Störfall vorteilhaft zwei Dioden gemäß Anspruch 6 vorgesehen sein, die bewirken, daß die Kapazität auf den Datenbus-Leitungen nicht als kapazitive Last wirksam wird.

Werden als elektronische Schalter DMOS-Transistoren eingesetzt, so können vorteilhaft gemäß Anspruch 7 zwei weitere Dioden vorgesehen sein, welche in einem Kurzschlußfalle, also in dem Falle, daß eine oder beide Leitungen des Darenbusses gegen Bezugspotential kurzgeschlossen werden, Strompfade über die DMOS-Transistoren geöffnet werden. Dies wird durch die beiden zusätzlichen Dioden gemäß Anspruch 7 verhindert.

Gemäß einer weiteren Ausgestaltung nach Anspruch 8 wird durch einen weiteren DMOS-Transistor, der demjenigen DMOS-Transistor parallelgeschaltet ist, der die Kapazität auf diejenige Datenbus-Leitung schaltet, die im dominanten Zustand hohen Pegel hat, ein fünfter, als DMOS-Transistor ausgelegter elektronischer Schalter (20) in der Weise parallel geschaltet ist, daß dieser auch bei einem Kurzschluß dieser Leitung (1) des Datenbusses leitend schaltbar ist. Bei einem Kurzschluß derjenigen Datenbus-Leitung, die im dominanten Zustand hohen Pegel hat, kann der DMOS-Transistor, der diese Leitung auf die Kapazität schaltet, unter Umständen nicht mehr leitend geschaltet werden. Um auch in einem solchen Störfall die Leitung auf die Kapazität schalten zu können, kann vorteilhaft der fünfte Transistor vorgesehen sein.

Da die elektronischen Schalter zum Umschalten der Kapazität entweder an die Spannungsquelle oder an die beiden Datenbus-Leitungen im Prinzip zu nahezu ähnlichen Zuständen zu schalten sind, kann, wie gemäß einer Ausgestaltung nach Anspruch 9 vorgesehen ist, vorteilhaft nur ein Steuersignal eingesetzt werden, welches jedoch für die beiden Gruppen der elektronischen Schalter geringfügig zu verzögern ist.

Der erfindungsgemäße Datenbus-Transmitter kann vorteilhaft insbesondere für einen CAN-Bus (ISO 11898) vorgesehen sein; alle Anforderungen an den Bus bzw. an die Eigenschaften des Transmitters werden erfüllt, gleichwohl wird die oben beschriebene geringe elektromagnetische Abstrahlung bewirkt.

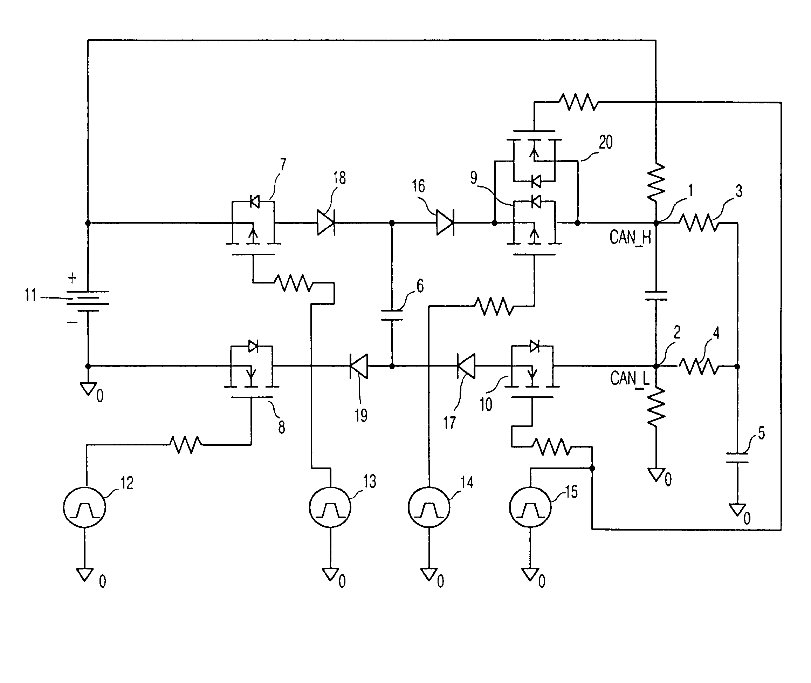

Nachfolgend wird anhand der einzigen Figur der Zeichnung ein Ausführungsbeispiel der Erfindung näher erläutert.

Die Figur zeigt ein Schaltbild eines erfindungsgemäßen Transmitters für einen CAN-Datenbus gemäß ISO 11898. Der Datenbus, der zweidrahtig und differentiell ist, wird in der Figur durch zwei Verbindungspunkte 1 und 2 repräsentiert, die eine gedachte Erstreckung zweier Leitungen eines Datenbusses repräsentieren. Die erste Leitung 1 ist in der Figur mit CAN_H bezeichnet, es handelt sich dabei um diejenige Leitung, die in einem dominanten Zustand des Datenbusses hohen Pegel aufweist Die zweite Leitung 2, die in der Figur mit CAN_L gekennzeichnet ist, ist diejenige Leitung, die im rezessiven Zustand des Datenbusses niedrigen Pegel aufweist.

In dem Beispiel gemäß der Figur ist der Abschlußwiderstand des Datenbusses zweigeteilt. Es ist somit ein erster Abschlußwiderstand 3 und ein zweiter Abschlußwiderstand 4 vorgesehen, deren Verbindungspunkt über eine Kapazität 5 auf ein Bezugspotential 0 geführt ist. Durch die Teilung des Abschlußwiderstandes kann eine Verringerung der elektromagnetischen Abstrahlung erreicht werden. Diese Verringerung ist jedoch noch nicht so stark, daß durch die elektromagnetische Abstrahlung keine Nachteile mehr eintreten können. Es sind daher in dem erfindungsgemäßen Transmitter weitere Vorkehrungen getroffen, um diese elektromagnetische Abstrahlung zu verringern.

Es ist dazu eine Kapazität 6 vorgesehen, welche mittels Schaltmitteln 7, 8, 9 und 10 alternativ entweder an eine Spannungsquelle 11 oder an die beiden Leitungen 1 und 2 des Datenbusses schaltbar ist.

Die Schaltmittel 7, 8, 9 und 10 sind in dem Ausführungsbeispiel gemäß der Figur als DMOS-Transistoren ausgelegt, die den Vorteil aufweisen, daß sie im aktiven Zustand einen geringen Widerstand aufweisen.

Es ist daher ein p-Kanal DMOS-Transistor 7 vorgesehen, dessen Source-Anschluß an den positiven Anschluß der Spannungsquelle 11 angeschlossen ist und dessen Drain-Anschluß mit einem ersten Pol der Kapazität 6 gekoppelt ist. Der zweite DMOS-Transistor 8, der vom n-Kanal Typ ist, ist mit seinem Source-Anschluß mit dem negativen Anschluß der Spannungsquelle 11 und Bezugspotential gekoppelt. Sein Drain-Anschluß ist mit dem zweiten Pol der Kapazität 6 gekoppelt. Beide Gate-Anschlüsse der DMOS-Transistoren 7 und 8 sind mit je einer Spannungsquelle 12 und 13 gekoppelt, welche Steuersignale liefern, die zum Schalten der DMOS-Transistoren 7 und 8 eingesetzt werden.

Werden die beiden DMOS-Transistoren 7 und 8 mittels der Spannungsquellen 12 und 13 bzw. der von diesen gelieferten Steuersignalen leitend geschaltet, so wird die Kapazität 6 mittels der Spannungsquelle 11 aufgeladen. Dieses wird während derjenigen Zeiten vorgenommen, in denen sich der Transmitter in einem passiven Zustand befindet, d.h. also in dem der Transmitter dem Datenbus keinen dominanten Zustand aufprägt.

Die beiden weiteren als Schaltmittel vorgesehenen dritten und vierten DMOS-Transistoren 9 und 10 sind jeweils mit ihrem Source-Anschluß mit den beiden Polen der Kapazität und mit ihren Drain-Anschlüssen mit den beiden Leitungen 1 und 2 des CAN-Datenbusses gekoppelt. Der dritte DMOS-Transistor ist vom p-Kanal Typ, der vierte vom n-Kanal Typ. Auch diese DMOS-Transistoren sind mittels Spannungsquellen 14 und 15, welche Steuersignale liefern, in den aktiven Zustand schaltbar. Die beiden DMOS-Transistoren 9 und 10 werden während solcher Zeiten aktiv geschaltet, in denen sich der Transmitter in einem aktiven Zustand befindet, in dem er dem Datenbus einen dominanten Zustand aufprägt.

Wesentlich hierbei ist, daß die Kapazität 6 alternativ entweder mittels der DMOS-Transistoren 7 und 8 an die Spannungsquelle 11 oder mittels der DMOS-Transistoren 9 und 10 an die Datenbus-Leitungen 1 und 2 des CAN-Datenbusses geschaltet wird. Niermals darf die Kapazität 6 gleichzeitig sowohl an die Spannungsquelle 11 wie auch an den Datenbus geschaltet werden.

Wie oben bereits erwähnt, wird, wenn sich der Transmitter im passiven Zustand befindet, die Kapazität 6 mittels der Spannungsquelle 11 aufgeladen. Es sind dann die Transistoren 7 und 8 leitend geschaltet und die Transistoren 9 und 10 sperrend geschaltet. Soll dann der Transmitter in den aktiven Zustand versetzt werden und dem Datenbus einen dominanten Zustand aufprägen, so werden die Transistoren 7 und 8 sperrend geschaltet und anschließend die Transistoren 9 und 10 leitend geschaltet. Damit ist die geladene Kapazität 6 auf den Datenbus geschaltet und prägt diesem einen dominanten Zustand auf Hierbei sind die beiden Leitungen 1 und 2 des Datenbusses nicht mit festem Potential gekoppelt, wie dieses bei Lösungen nach dem Stand der Technik der Fall ist. Vielmehr hat die Kapazität schwebendes Potential und die Spannung der beiden Datenbus-Leitungen 1 und 2 wird ausschließlich durch den Strom bestimmt, der durch die Kapazität 6 fließt. Dadurch wird erreicht, daß auch dann, wenn die DMOS-Transistoren 9 und 10 unterschiedliche Schaltcharakteristiken haben, auch beim Einschalten keine störende elektromagnetische Abstrahlung durch die Datenbus-Leitungen 1 und 2 stattfindet.

Normalerweise wird ein dominanter Zustand dem Datenbus nur während festgelegter Zeitphasen aufgeprägt, während derer die Ladung der Kapazität 6 ausreicht, um dem Datenbus den dominanten Zustand aufzuprägen. In einem Fehlerfalle könnte der Fall eintreten, daß versucht wird, über längere Phasen dem Datenbus einen dominanten Zustand aufzuprägen, was an sich gemäß CAN-Protokoll nicht gestattet ist. Die Kapazität kann den dominanten Zustand zwar nur für begrenzte Zeit aufrechterhalten Es würde dann jedoch der Fall eintreten, daß die Kapazität 6 eine kapazitive Last zwischen den beiden Datenbus-Leitungen 1 und 2 darstellt. Um dies zu verhindern, sind eine erste Diode 16 und eine zweite Diode 17 vorgesehen, welche zwischen die Kapazität 6 und die beiden Datenbus-Leitungen 1 und 2 geschaltet sind. Dabei ist die erste Diode 16 anodenseitig mit einem ersten Pol der Kapazität 6 und die zweite Diode 17 anodenseitig mir der zweiten Leitung 2 des Datenbusses gekoppelt. Damit wird erreicht, daß auch in einem solchen Fall fehlerhafter Funktion des Transmitters die Kapazität 6 für den Datenbus bzw. dessen Leitungen 1 und 2 nicht als kapazitive Last in Erscheinung tritt.

Durch Störsignale auf den Datenbus-Leitungen, die z.B. durch Kurzschlüsse oder elektromagnetische Einstrahlung verursacht werden können, könnten die Potentiale der beiden Datenbus-Leitungen höher als das Potential des positiven Pols der Spannungsquelle 11 oder niedriger als das Potential dessen negativen Pols sein. Tritt ein solcher Fall während des aktiven Zustands des Transmitters ein, in dem die DMOS-Transistoren 9 und/oder 10 eingeschaltet sind, entsprechen die Potentiale am Kondensator 6 in etwa denen der Datenbus-Leitungen. Um zu verhindern, daß in diesem Fall trotz des Potentialunterschieds und der internen Dioden der DMOS-Transistoren 7 und 8 kein Strom zwischen der Kapazität 6 und der Spannungsquelle fließen kann, sind eine dritte Diode 18 und eine vierte Diode 19 vorgesehen. Die Diode 18 ist zwischen die beiden DMOS-Transistoren 7 und 9 geschaltet und anodenseitig mit dem positiven Pol der Spannungsquelle 11 gekoppelt. Die Diode 19 ist zwischen die beiden DMOS-Transistoren 8 und 10 geschaltet und anodenseitig mit der zweiten Leitung 2 des CAN-Datenbusses gekoppelt.

Es ist ferner ein fünfter DMOS-Transistor 20 vorgesehen, welcher vom n-Kanal Typ ist und dem dritten DMOS-Transistor 9 parallelgeschaltet ist und welcher sourceseitig mit der ersten Leitung des CAN-Datenbusses und drainseitig mit dem ersten Pol der Kapazität 6 gekoppelt ist. Der Gate dieses fünften DMOS-Transistors 20 wird mittels der Stromquelle 15 angesteuert, welche im aktiven Zustand des Transmitters den DMOS-Transistor 10 aktiv schaltet.

Mittels dieses fünften DMOS-Transistors 20 wird erreicht, daß bei einem Kurzschluss der Leitung 1 (CAN_H) nach Bezugspotential diese Leitung 1 mittels des fünften Transistors 20 auf die Kapazität schaltbar ist. Es kann in einem solchen Kurzschlußfall nämlich der p-Kanal MOSFET 9 nicht mehr eingeschaltet werden, da sein Drain-Anschluß mit der Leitung 1bereits auf Masse liegt und er im eingeschalteten Zustand (d.h. mit Source = Drain) eine negative Gate-source Spannung bräuchte, aber keine Spannungen zur Verfügung stehen, die negativer sind als Bezugspotential.

Deshalb wird parallel zu ihm der redundante n-Kanal MOSFET 20 verwendet, der zwar im Normalfall sich meist nicht richtig einschalten lassen wird, weil im Normalfall CAN_H (=sein Source Anschluss) ein zu positives Signal trägt, jedoch im Spezialfall von CAN_H = 0V wegen Kurzschluss ist der Transistor 20 einschaltbar und kann die Funktion des Transistors 9 übernehmen.

Zusammengefasst ist im Normalfall Transistor 9 schaltbar und Transistor 20 nur bedingt einschaltbar, waehrend im Kurzschlussfall CAN_H = 0V Transistor 20 schaltbar ist und Transistor 9 nur bedingt einschaltbar. Der jeweils nur bedingt einschaltbare MOSFET ist entweder aus wenn er aus sein soll oder er ist an wenn er an sein darf oder er ist nicht an, obwohl er an sein dürfte. Insofern stört er nicht den Betrieb.

In der Darstellung gemäß der Figur sind für die vier als Schaltmittel dienenden DMOS-Transistoren 7, 8, 9 und 10 sowie dem gegebenenfalls vorteilhaft vorgesehen DMOS-Transistor 20 insgesamt vier Spannungsquellen 12, 13, 14 und 15 vorgesehen die die Steuersignale liefern. Diese Generierung der Steuersignale kann dadurch deutlich vereinfacht werden, daß nur ein Steuersignal zum Ansteuern aller dieser DMOS-Transistoren vorgesehen ist. Dabei ist jedoch bei einem Übergang des Transmitters vom aktiven in den passiven Zustand das Steuersignal vor Zuführung an die beiden DMOS-Transistoren 7 und 8 zu verzögern und bei einem Übergang des Transmitters vom passiven in den aktiven Zustand ist das Steuersignal vor Zuführung an die beiden anderen DMOS-Transistoren 9 und 10 zu verzögern. Damit wird erreicht, daß die Kapazität 6 zunächst von der Spannungsquelle getrennt und dann erst auf den Datenbus geschaltet wird bzw. daß sie umgekehrt erst von dem Datenbus getrennt und dann auf die Spannungsquelle geschaltet wird.

Wird eine derartige Verzögerung eingesetzt, genügt ein Steuersignal, so daß eine weitere Vereinfachung eintritt.

Zusammenfassend ist festzustellen, daß durch den Einsatz der Kapazität, welche alternativ durch die Spannungsquelle geladen oder auf den Datenbus geschaltet wird, die elektromagnetische Abstrahlung während derjenigen Zeiten, in denen ein Übergang von dem aktiven in den passiven Zustand des Transmitters oder umgekehrt stattfindet, verringert werden kann. Dies gelingt dadurch, daß im aktiven Zustand des Transmitters den beiden Leitungen 1 und 2 des Datenbusses kein festes Potential aufgeprägt wird, sondern daß diese auf die Kapazität 6 geschaltet werden, welche schwebendes Potential hat. Dabei wird die Spannung in den Datenbus-Leitungen 1 und 2 im wesentlichen nur durch denjenigen Strom bestimmt, der durch die Kapazität 6 fließt.

## Patentansprüche

1. Transmitter für einen zweidrahtigen, differentiellen Datenbus, dem mittels des Transmitters in einem aktiven Zustand des Transmitters ein dominanter Zustand aufprägbar ist und der sich in einem rezessiven Zustand befindet, wenn alle an den Datenbus angeschlossenen Transmitter sich in einem passiven Zustand befinden,
**dadurch gekennzeichnet,**
**daß** in dem Transmitter eine Kapazität (6) sowie Schaltmittel (7,8,9,10) vorgesehen sind, mittels welcher die Kapazität (6) alternativ an eine elektrische Quelle (11) oder zwischen die beiden Datenbus-Leitungen (1,2) koppelbar ist,
und **daß** die Schaltmittel (7,8,9,10) die Kapazität (6) während Zeiten, in denen der Transmitter sich in einem passiven Zustand befindet, mittels der elektrischen Quelle (11) laden und während Zeiten, in denen der Transmitter sich in einem aktiven Zustand befindet, die Kapazität (6) zwischen die beiden Datenbus-Leitungen (1,2) koppeln.

2. Transmitter nach Anspruch 1, **dadurch gekennzeichnet,**
**daß** die Schaltmittel (7,8,9,10) einen ersten und einen zweiten elektronischen Schalter (7,8), mittels derer die Kapazität (6) an beide Pole der elektrischen Quelle (11) schaltbar ist, und einen dritten und einen vierten elektronischen Schalter (9,10) aufweisen, mittels derer die Kapazität (6) an die beiden Datenbus-Leitungen (1,2) schaltbar ist.

3. Transmitter nach Anspruch 1, **dadurch gekennzeichnet,**
**daß** als elektrische Quelle eine Spannungsquelle (11) vorgesehen ist.

4. Transmitter nach Anspruch 2, **dadurch gekennzeichnet,**
**daß** als elektronische Schalter Transistoren (7,8,9,10) vorgesehen sind.

5. Transmitter nach Anspruch 3, **dadurch gekennzeichnet,**
**daß** als Transistoren DMOS-Transistoren (7,8,9,10) vorgesehen sind.

6. Transmitter nach Anspruch 1, **dadurch gekennzeichnet,**
**daß** eine erste Diode (16), welche zwischen einen ersten Anschluß der Kapazität (6) und die erste Leitung (1) des Datenbusses gekoppelt ist, und deine zweite Diode (17) vorgesehen sind, welche zwischen einen zweiten Anschluß der Kapazität (6) und die zweite Leitung (2) des Datenbusses gekoppelt ist.

7. Transmitter nach Anspruch 5, **dadurch gekennzeichnet,**
**daß** eine dritte Diode (18), welche zwischen die Spannungsquelle (11) und die erste Leitung (1) des Datenbusses gekoppelt ist, und eine vierte Diode (19) vorgesehen sind, welche zwischen die Spannungsquelle (11) und die zweite Leitung (2) des Datenbusses gekoppelt ist.

8. Transmitter nach Anspruch 5, **dadurch gekennzeichnet,**
**daß** dem dritten, als DMOS-Transistor ausgelegten elektronischen Schalter (9), mittels dessen diejenige Leitung (1) des Datenbusses an die Kapazität (6) schaltbar ist, welche im dominante Zustand einen hohen Pegel hat, ein fünfter, als DMOS-Transistor ausgelegter elektronischer Schalter (20) in der Weise parallel geschaltet ist, daß dieser auch bei einem Kurzschluß dieser Leitung (1) des Datenbusses leitend schaltbar ist.

9. Transmitter nach Anspruch 2, **dadurch gekennzeichnet,**
**daß** ein Steuersignal zum Ansteuern der elektronischen Schalter (7,8,9,10) vorgesehen ist, wobei bei einem Übergang des Transmitters vom aktiven in den passiven Zustand das Steuersignal vor Zuführung an den ersten und den zweiten elektronischen Schalter (7,8) verzögert wird und bei einem Übergang des Transmitters vom passiven in den aktiven Zustand das Steuersignal vor Zuführung zu dem dritten und dem vierten elektronischen Schalter (9,10) verzögert wird.

10. Transmitter nach Anspruch 1, **dadurch gekennzeichnet,**
**daß** als Datenbus ein CAN-Bus vorgesehen ist.

## Claims

1. A transmitter for a two-wire differential data bus on which a dominant state can be imposed by means of the transmitter in an active state of the transmitter and which is in a recessive state when all the transmitters connected to the data bus are in a passive state, **characterised in that** the transmitter comprises a capacitor (6) as well as switching means (7, 8, 9, 10) by means of which the capacitor (6) can alternatively be coupled to an electric source (11) or between the two data bus lines (1, 2) and **in that** the switching means (7, 8, 9, 10) charge the capacitor (6) by means of the electric source (11) during periods of time in which the transmitter is in a passive state and couple the capacitor (6) between the two data bus lines (1, 2) during periods of time in which the transmitter is in an active state.

2. A transmitter as claimed in claim 1, **characterised in that** the switching means (7, 8, 9, 10) comprise a first and a second electronic switch (7, 8) by means of which the capacitor (6) can be switched to the two poles of the electric source (11) and include a third and a fourth electronic switch (9, 10) by means of which the capacitor (6) can be switched to the two data bus lines (1, 2).

3. A transmitter as claimed in claim 1, **characterised in that** a voltage source (11) is provided as an electric source (11).

4. A transmitter as claimed in claim 2, **characterised in that** transistors (7, 8, 9, 10) are arranged as electronic switches.

5. A transmitter as claimed in claim 3, **characterised in that** DMOS transistors (7, 8, 9, 10) are provided for transistors.

6. A transmitter as claimed in claim 1, **characterised in that** a first diode (16) is provided which is coupled between a first terminal of the capacitor (6) and the first line (1) of the data bus and a second diode (17) is provided which is coupled between a second terminal of the capacitor (6) and the second line (2) of the data bus.

7. A transmitter as claimed in claim 5, **characterised in that** a third diode (18) is provided which is coupled between the voltage source (11) and the first line (1) of the data bus and a fourth diode (19) is provided which is coupled between the voltage source (11) and the second line (2) of the data bus.

8. A transmitter as claimed in claim 5, **characterised in that** to the third electronic switch (9) arranged as a DMOS transistor, by means of which the very line (1) of the data bus that in the dominant state has a high level can be switched to the capacitor (6), is connected in parallel a fifth DMOS-transistor-arranged electronic switch (20) so that the latter switch is operable even in the event of a short-circuit of this line (1) of the data bus.

9. A transmitter as claimed in claim 2, **characterised in that** a control signal for driving the electronic switches (7, 8, 9, 10) is provided while in the event of a transition of the transmitter from the active state to the passive state the control signal is delayed prior to being applied to the first and the second electronic switches (7, 8) and in the event of a transition of the transmitter from the passive state to the active state the control signal is delayed prior to being applied to the third and the fouh electronic switches (9, 10).

10. A transmitter as claimed in claim 1, **characterised in that** a CAN bus is provided as a data bus.

## Revendications

1. Transmetteur destiné à un bus de données différentiel bifilaire auquel un état dominant peut être imposé au moyen du transmetteur dans un état actif du transmetteur et qui se trouve dans un état récessif lorsque tous les transmetteurs reliés au bus de données se trouvent dans un état passif,
**caractérisé en ce**
**qu'**il est prévu dans le transmetteur un condensateur (6) ainsi que des moyens de commutation (7, 8, 9, 10) qui permettent de coupler le condensateur (6) au choix à une source électrique (11) ou entre les deux lignes du bus de données (1, 2),
et en ce que, pendant les temps durant lesquels le transmetteur se trouve dans un état passif, les moyens de commutation (7, 8, 9, 10) chargent le condensateur (6) au moyen de la source électrique (11) et, pendant les temps durant lesquels le transmetteur se trouve dans un état actif, ils couplent le condensateur (6) entre les deux lignes du bus de données (1, 2).

2. Transmetteur selon la revendication 1, **caractérisé en ce**
**que** les moyens de commutation (7, 8, 9, 10) comportent un premier et un deuxième commutateur électronique (7, 8) au moyen desquels le condensateur (6) peut être relié aux deux pôles de la source électrique (11), et un troisième et quatrième commutateur électronique (9, 10) au moyen desquels le condensateur (6) peut être relié aux deux lignes du bus de données (1, 2).

3. Transmetteur selon la revendication 1, **caractérisé en ce**
**que** la source électrique prévue est une source de tension (11).

4. Transmetteur selon la revendication 2, **caractérisé en ce**
**que** des transistors (7, 8, 9, 10) sont prévus en tant que les commutateurs électroniques.

5. Transmetteur selon la revendication 3, **caractérisé en ce**
**que** les transistors sont prévus comme des transistors DMOS (7, 8, 9, 10).

6. Transmetteur selon la revendication 1, **caractérisé en ce**
**qu'**il est prévu une première diode (16), qui est couplée entre une première borne du condensateur (6) et la première ligne (1) du bus de données, et une deuxième diode (17) qui est couplée entre une deuxième borne du condensateur (6) et la deuxième ligne (2) du bus de données.

7. Transmetteur selon la revendication 5, **caractérisé en ce**
**qu'**il est prévu une troisième diode (18), qui est couplée entre la source de tension (11) et la première ligne (1) du bus de données, et une quatrième diode (19) qui est couplée entre la source de tension (11) et la deuxième ligne (2) du bus de données.

8. Transmetteur selon la revendication 5, **caractérisé en ce**
**qu'**un cinquième commutateur électronique (20), réalisé par un transistor DMOS, est couplé en parallèle au troisième commutateur électronique (9) réalisé par un transistor DMOS qui permet de relier au condensateur (6) la ligne (1) du bus de données qui a un niveau haut dans l'état dominant, d'une manière telle que ce cinquième commutateur électronique puisse être rendu conducteur également en cas d'un court-circuit de cette ligne (1) du bus de données.

9. Transmetteur selon la revendication 2, **caractérisé en ce**
**qu'**il est prévu un signal de commande permettant de commander les commutateurs électroniques (7, 8, 9, 10), qu'en cas d'un passage du transmetteur de l'état actif à l'état passif, le signal de commande est retardé avant son application aux premier et deuxième commutateurs électroniques (7,8) et, qu'en cas d'un passage du transmetteur de l'état passif à l'état actif, le signal de commande est retardé avant son application aux troisième et quatrième commutateurs électroniques (9, 10).

10. Transmetteur selon la revendication 1, **caractérisé en ce**
**qu'**un bus CAN est prévu en tant que le bus de données.
